# EUROPÄISCHE PATENTSCHRIFT

(11) **EP 1 720 629 B1**
(45) Veröffentlichungstag und Bekanntmachung des Hinweises auf die Patenterteilung: **07.05.2008**
(21) Anmeldenummer: 05715634.1
(22) Anmeldetag: 01.03.2005
(51) Int. Cl.: B01D 46/04

(54) **FILTERVORRICHTUNG ZUM ABSCHEIDEN VON PARTIKELN AUS GASEN**
FILTER DEVICE WHICH IS USED TO SEPARATE PARTICLES FROM GASES
DISPOSITIF DE FILTRAGE DESTINE A SEPARER DES PARTICULES A PARTIR DE GAZ

(30) Priorität: 05.03.2004 DE 102004010724
(43) Veröffentlichungstag der Anmeldung: 15.11.2006
(73) Patentinhaber: Dantherm Filtration GmbH, 77948 Friesenheim (DE)
(72) Erfinder: FASSBENDER, Erich, 77948 Friesenheim (DE)
(74) Vertreter: Lenz, Steffen
(86) Internationale Anmeldenummer: PCT/EP2005/002144
(87) Internationale Veröffentlichungsnummer: WO 2005/084781

(56) Entgegenhaltungen:
- DE-A- 2 011 442
- DE-A- 3 006 823
- US-A- 4 264 645
- US-A- 4 435 197

## Beschreibung

Die Erfindung betrifft eine Filtervorrichtung zum Abscheiden von Partikeln, insbesondere Staub, aus Gasen, mit einem Filtergehäuse mit einer an einen Rohgasstrom anschließbaren Abscheidekammer und einer von dieser durch wenigstens eine Trennwand getrennten Reingaskammer, wobei die Abscheidekammer mit mehreren in Reihen, Spalten und/oder matrixartig in Reihen und Spalten angeordneten Filterelementen aus einem auf einem Abstandhalter angeordneten Filtertaschen ausgestattet ist, deren Mündungen jeweils mittels eines durch Klemmelemente, welche an der der Abscheidekammer abgewandten Seite der Trennwand festlegbar sind, gehaltenen Klemmrahmens derart an Öffnungen in der Trennwand festgelegt sind, daß der Mündungsabschnitt der Filtertasche die Öffnung in der Trennwand in Richtung der Reingaskammer durchsetzt und die Mündung der Filtertasche im wesentlichen staubdicht zwischen der Trennwand und einem Klemmflansch des Klemmrahmens geklemmt ist, wobei den Filterelementen wenigstens eine an eine Druckgasquelle anschließbare Gasdüse zugeordnet ist, welche insbesondere taktweise über die Öffnungen in der Trennwand verfahrbar ist, um die Filtertaschen mit einem Innendruck zu beaufschlagen.

Derartige, auch als Taschenfilter bezeichnete Filtervorrichtungen sind bekannt. Sie weisen aufgrund der Vielzahl an Filtertaschen eine große Filterfläche bei einem kompakten Aufbau der Filtervorrichtung auf. Die über die Mündungen der in der Regel von einem Textilmaterial gebildeten Filtertaschen verfahrbare Druck- bzw. Spülgasdüse hat den Vorteil, daß jeweils eine oder vorzugsweise mehrere Filtertaschen durch Beaufschlagen derselben mit einem Innendruck gereinigt werden können, wobei die auf der Außenseite der Filtertaschen angelagerte Staubschicht entfernt wird, während die übrigen Filtertaschen in Funktion bleiben. Auf diese Weise ist ein kontinuierlicher Betrieb der Filtervorrichtung möglich.

Um den in der Abscheidekammer zur Verfügung stehenden Raum bestmöglich auszunutzen, sind die Abstandhalter der Filtertaschen und somit die über die Abstandhalter gezogenen Filtertaschen selbst gewöhnlich flach ausgestaltet und weisen die Öffnungen in der Trennwand eine entsprechende, etwa schlitzartige Form auf. Ferner kann es günstig sein, wenn die Filtertaschen nicht senkrecht, sondern im wesentlichen horizontal angeordnet sind, da in diesem Fall bei gleicher Grundfläche der Abscheidekammer über deren Höhe mehr Filtertaschen vorgesehen werden können und diese darüber hinaus über ihre gesamte Erstreckung weitestgehend gleichmäßig belastet sind. Die einzelnen Filtertaschen müssen grundsätzlich lösbar in der Filtervorrichtung angeordnet sein, um sie im Falle eines Defektes oder einer Verblockung infolge nicht mehr ablösbaren Staubes auswechseln zu können.

Die DE 1 407 944 A1 beschreibt einen Taschenfilter, bei welchem jeder Filtertasche eine individuelle, am Gehäuse des Filters befestigte Spülluftdüse in Form eines Düsenrohrs zugeordnet ist. Zwischen der Filtertasche und dem Düsenrohr ist ein Strömungsschacht angeordnet, welcher in die Reingaskammer mündet und über dessen Ausmündung das Düsenrohr angeordnet ist. Der Schacht und der rahmenförmige, mit einer Gitterbespannung versehene Abstandhalter sind als einstückiges Bauteil ausgebildet. Über den Rahmen des Abstandhalters ist die textile Filtertasche aufgezogen, welche an ihrer offenen Mündung unter Einschluß einer Rundschnurdichtung eingerollt ist. Mittels eines an dem Schacht im Bereich der Ansatzstelle des Abstandhalters angeordneten Flansches läßt sich der eingerollte Rand der Filtertasche durch eine Verschraubung von außen gegen die Trennwand zwischen der Abscheidekammer und der Reingaskammer staubdicht festklemmen. Um eine einzelne Filtertasche auszutauschen, muß zunächst das Düsenrohr gelöst und entfernt, anschlie-ßend die Befestigungsschrauben des Flansches gelöst, der Schacht zusammen mit dem Abstandhalter und schließlich die Filtertasche aus der Trennwand herausgezogen werden. Abgesehen von dem erheblichen Zeitaufwand, den ein solcher Austausch erfordert, ist weiterhin von Nachteil, daß sich die Filtertaschen nicht spannen bzw. nachspannen lassen, was jedoch für eine einwandfreie Funktion erwünscht ist. Darüber hinaus läßt sich diese Ausbildung naturgemäß bei einem Taschenfilter mit einer verfahrbaren Gasdüse nicht einsetzen.

Eine gattungsgemäße Filtervorrichtung ist der DE 27 38 942 C2 entnehmbar. Zur Befestigung des Klemmrahmens an der der Abscheidekammer abgewandten Außenseite der zwischen der Abscheidekammer und der Reingaskammer angeordneten Trennwand unter staubdichtem, elastischem Andruck der mit einem Dichtungskragen versehenen Mündung der Filtertasche gegen die Außenseite der Trennwand ist vorgesehen, daß die Trennwand außenseitig mit senkrechten Stegen ausgebildet ist, welche jeweils eine Spalte der schlitzförmigen Öffnung in der Trennwand zur Aufnahme der Filtertaschen zwischen sich begrenzen. Die Stege sind an ihren einander zugewandten Seiten auf Höhe einer jeden Öffnung mit koaxialen Bohrungen ausgestattet, welche zur Aufnahme der Enden je eines Federbügels dienen, mittels welchem der Klemmrahmen unter Zwischenanordnung der Mündung der Filtertasche gegen die Trennwand verspannbar ist. Die Spülgasdüse ist dabei über die zwischen den Stegen der Trennwand angeordneten Klemmrahmen der Filtertaschen über die Stege hinweg führbar. Im Bereich ihrer der Trennwand abgewandten Enden liegen die Filtertaschen bzw. deren sie aufspannenden Abstandhalter auf Auflagebänken auf, welche im Innern der Abscheidekammer montiert sind.

Zwar ermöglicht die bekannte Filtervorrichtung eine relativ einfache Auswechslung einzelner Filtertaschen, indem der Federbügel gelöst und von den Stegen der Trennwand entfernt, der Klemmrahmen abgenommen und die Filtertasche gemeinsam mit ihrem Abstandhalter durch den Öffnungsschlitz in der Trennwand aus der Abscheidekammer heraus gezogen wird. Indes ist die Ausbildung der mit den Stegen versehenen Trennwand sowohl hinsichtlich der Material- als auch der Herstellungskosten sehr teuer. Überdies sind der Breite der Öffnungsschlitze bzw. dem seitlichen Abstand desselben durch die Stege Grenzen gesetzt, so daß der in der Abscheidekammer zur Verfügung stehende Raum nicht optimal ausgenutzt werden kann. Schließlich ist es in handhabungstechnischer Hinsicht ungünstig, daß die Federbügel gänzlich von den Stegen der Trennwand abgenommen und beiseite gelegt werden müssen, indem die Enden der Federbügel zusammengedrückt werden müssen, um sie außer Eingriff mit den koaxialen Bohrungen in den Stegen der Trennwand zu bringen.

Eine im wesentlichen staubdichte Befestigung der Filtertaschen eines Taschenfilters an einer zwischen Abscheide- und Reingaskammer angeordneten, ebenen Trennwand ist aus der DE 31 27 926 A1 bekannt. In diesem Fall ist der Klemmrahmen, welcher die mit einem Dichtungskragen versehene Mündung der Filtertasche zwischen sich und der der Abscheidekammer abgewandten äußeren Seite der Trennwand festklemmt, mit einem in den Öffnungsschlitz der Trennwand eingreifenden Klemmbügel ausgestattet, dessen Länge die Breite des Öffnungsschlitzes übertrifft. Nach Aufsetzen des Klemmrahmens auf den Öffnungsschlitz unter Zwischenanordnung der Mündung der Filtertasche wird der Klemmbügel um 90° gedreht, so daß seine Enden gegen die der Abscheidekammer zugewandte Innenseite der Trennwand angedrückt werden. Der elastische Andruck des Klemmrahmens an die Trennwand geschieht mittels einer auf dem in den Öffnungsschlitz eingreifenden Steg des Klemmbügels sitzenden Schraubenfeder.

Nachteilig ist insbesondere, daß das Textilmaterial der Filtertasche in dem Bereich, in welchem es zwischen der der Abscheidekammer zugewandten Innenseite der Trennwand und dem Klemmbügel des Klemmrahmens unter radialer Aufweitung eingeklemmt ist, Gefahr läuft durchzuscheuern, so daß es während des Betriebs zu einem Durchtritt der abzuscheidenden Staubpartikel in die Reingaskammer kommt, was es in jedem Fall zu vermeiden gilt.

Entsprechendes gilt für eine ähnliche Befestigung der Filtertasche eines Taschenfilters mittels eines Klemmrahmens gemäß der DE 30 06 823 A1, bei welcher eine mit dem Klemmbügel des Klemmrahmens zusammenwirkende Anordnung von Federdrähten das durch die Öffnungsschlitze in der Trennwand in Richtung der Reingaskammer nach außen hindurch gezogene Textilmaterial der Filtertaschen unter radialer Aufweitung desselben gegen die der Abscheidekammer zugewandte Innenseite der Trennwand klemmt.

Der Erfindung liegt, ausgehend von der oben zitierten DE 30 06 823 C2, die Aufgabe zugrunde, eine Filtervorrichtung der eingangs genannten Art unter Vermeidung der vorgenannten Nachteile dahingehend weiterzubilden, daß eine einfache und kostengünstige, staubdichte Befestigung der Filtertaschen an der Trennwand unter Gewährleistung einer schnellen Auswechselbarkeit einzelner Filtertaschen gewährleistet ist.

Erfindungsgemäß wird diese Aufgabe bei einer Filtervorrichtung der eingangs genannten Art dadurch gelöst, daß die Klemmelemente von Niederhaltern gebildet sind, welche an der der Abscheidekammer abgewandten Seite der Trennwand mittels Bolzen befestigbar sind und die Klemmrahmen an wenigstens zwei entgegengesetzten Seiten unter elastischem Andruck gegen die Trennwand halten.

Die erfindungsgemäße Befestigung der Filtertaschen mittels der den Klemmrahmen festklemmenden Niederhalter an der die Abscheidekammer von der Reingaskammer distanzierenden Trennwand ermöglicht eine einfache und schnelle Montage bzw. Demontage einzelner Filtertaschen, wobei die Niederhalter aufgrund der Befestigung an der Trennwand mittels Bolzens nicht gänzlich entfernt werden müssen, wie es bei den Federbügeln gemäß der DE 27 38 942 C2 der Fall ist, sondern die Niederhalter eines Klemmrahmens müssen zur Demontage der zugehörigen Filtertasche lediglich in eine Position verbracht werden, in welcher sie sich nicht mehr in klemmendem Eingriff mit dem Klemmrahmen befinden. Zusätzliche Befestigungselemente, welche gänzlich von der Trennwand und/oder dem Klemmrahmen gelöst und beiseite gelegt werden müssen, z.B. Federbügel, sind somit entbehrlich, wodurch eine einfachere Handhabung gewährleistet wird.

Darüber hinaus wird aufgrund der gasdichten Klemmung der Mündung der Filtertaschen an der der Abscheidekammer abgewandten Außenseite der Trennwand die Gefahr einer Beschädigung des durch die Öffnungen in der Trennwand hindurch gezogenen Textilmaterials der Filtertaschen durch mechanische Einwirkung, insbesondere Reibung, zuverlässig verhindert, so daß es während des Betriebs nicht zum Durchtritt der abzuscheidenden Staubpartikel in die Reingaskammer kommen kann, wie es bei einer Befestigung der Filtertaschen gemäß der DE 31 27 926 A1 bzw. DE 30 06 823 A1 der Fall sein kann.

Schließlich macht die erfindungsgemäße Ausgestaltung die Anordnung von Stegen an der Trennwand zum Festlegen von Klemmelementen der Klemmrahmen entbehrlich. Somit lassen sich Öffnungen mit einer vorgegebenen Breite mit einem engeren Abstand voneinander anordnen bzw. lassen sich Öffnungen mit einem vorgegebenen Abstand mit einer größeren Breite ausbilden, so daß der in der Abscheidekammer zur Verfügung stehende Raum optimal ausgenutzt bzw. der maximale Gasdurchsatz durch die Filtervorrichtung, welcher proportional zum Gesamtquerschnitt der in den Öffnungen der Trennwand gehaltenen Filtertaschen ist, maximiert werden kann. Ferner läßt sich die Trennwand gegenüber einer Trennwand mit zwischen den Öffnungen für die Filtertaschen angeordneten Stegen sowohl hinsichtlich der Material- als auch der Fertigungskosten erheblich preiswerter ausgestalten.

In bevorzugter Ausführung ist vorgesehen, daß die Trennwand im wesentlichen eben ausgebildet ist. Mit "ebene" Trennwand ist dabei eine Trennwand angesprochen, bei welcher zumindest die der Reingaskammer zugewandte Außenseite im wesentlichen planar ausgebildet ist, ohne daß sie Befestigungsstege oder ähnliche Halteeinrichtungen für Befestigungselemente der Klemmrahmen aufweist, welche eine Anordnung der Öffnungen dicht an dicht nennenswert behindern würden. Selbstverständlich kann die Trennwand, insbesondere an ihrer der Abscheidekammer zugewandten Innenseite, z.B. auch eine Oberflächenprofilierung, Versteifungsrippen oder ähnliche, die Steifigkeit der Trennwand erhöhende Elemente aufweisen.

Die Niederhalter sind vorzugsweise mittels wenigstens eines zwischen dem Kopf des Bolzens und einem von dem Bolzen durchsetzten Bodenabschnitt des Niederhalters angeordneten Federelementes, insbesondere einer Schraubenfeder, elastisch in Richtung der Trennwand vorbelastet. Auf diese Weise stehen die Niederhalter stets unter der für eine im wesentlichen gasdichte Klemmung der Mündung der Filtertaschen zwischen dem Klemmrahmen und dem Rand der in der Trennwand vorgesehenen Öffnungen erforderlichen elastischen Vorbelastung.

Eine bevorzugte Ausführung sieht vor, daß die Niederhalter wenigstens einen, im wesentlichen radial nach außen vorstehenden Klemmvorsprung aufweisen, welcher durch Drehen des Niederhalters um die Achse des Bolzens in eine Position bringbar ist, in welche er den Klemmflansch des Klemmrahmens unter Zwischenanordnung der Mündung der Filtertasche gegen die Trennwand andrückt. Auf diese Weise ist eine in handhabungstechnischer Hinsicht besonders einfache Montage und Demontage der Filtertaschen möglich, indem der Niederhalter entgegen seiner elastischen Vorbelastung entlang der Achse des Bolzens nach außen von der Trennwand weg verlagert und der Niederhalter sodann um die Achse des Bolzens gedreht wird, um seinen Klemmvorsprung mit dem Klemmrahmen in klemmendem Eingriff (im Falle der Montage) bzw. seinen Klemmvorsprung mit dem Klemmrahmen außer Eingriff zu bringen (im Falle der Demontage).

Bei einer solchen Ausgestaltung der Niederhalter ist in vorteilhafter Ausgestaltung vorgesehen, daß zumindest einige Niederhalter mit zwei, insbesondere entgegengesetzt angeordneten, Klemmvorsprüngen ausgestattet sind, welche durch Drehen des Niederhalters um die Achse des Bolzens in eine Position bringbar sind, in welcher sie die Klemmflansche zweier benachbarter Klemmrahmen unter Zwischenanordnung der Mündung der jeweils zugehörigen Filtertaschen gegen die Trennwand andrücken. Folglich dienen die Niederhalter zum klemmenden Festlegen jeweils zwei benachbarter Klemmrahmen und läßt sich die Anzahl der zur Befestigung der Klemmrahmen erforderlichen Niederhalter reduzieren.

Der Klemmflansch des Klemmrahmens weist vorzugsweise eine Anlaufschräge für den Klemmvorsprung des Niederhalters auf, um die Montage bzw. Demontage des Klemmrahmens, bei welcher der Niederhalter um die Achse des Bolzens gedreht und der Klemmvorsprung des Niederhalters auf diese Weise über den Rand des Klemmflansches des Klemmrahmens aufgeschoben bzw. von diesem abgeschoben wird, zu erleichtern.

Der von dem Niederhalter, insbesondere von dessen Klemmvorsprung, übergriffene Abschnitt des Klemmflansches des Klemmrahmens ist in vorteilhafter Ausgestaltung zurückgenommen ausgebildet, so daß der gesamte Niederhalter im wesentlichen auf dem Niveau des Klemmrahmens angeordnet ist. Auf diese Weise wird eine Bewegung der Gasdüse über die Mündungsöffnungen der Filtertaschen hinweg im wesentlichen parallel zur Erstreckungsebene der Trennwand nicht beeinträchtigt.

Zu dem selben Zweck ist der Kopf des den Niederhalter an der Trennwand haltenden Bolzens zweckmäßig mit einem Abstand von der Trennwand angeordnet, welcher höchstens dem Abstand des Klemmflansches des Klemmrahmens von der Trennwand im Montagezustand der Filtertaschen entspricht.

In bevorzugter Ausführung ist vorgesehen, daß die Niederhalter zwei im wesentlichen radial nach außen vorstehende, entgegengesetzt angeordnete Betätigungsvorsprünge aufweisen, welche zum Ergreifen derselben, insbesondere mittels eines Werkzeugs, ausgebildet sind. Auf diese Weise lassen sich die Niederhalter auf einfache Weise, z.B. mittels eines Greifwerkzeugs, ergreifen, um sie von dem Klemmrahmen zu lösen bzw. letzteren an der Trennwand festzulegen.

Die zur Befestigung der Niederhalter an der Trennwand dienenden Bolzen sind mit Vorteil an der der Abscheidekammer abgewandten Seite der Trennwand verschraubbar, um die Niederhalter einerseits auf einfache Weise lösen und gegebenenfalls austauschen, andererseits die elastische Vorbelastung der Niederhalter durch Kompression bzw. Expansion des insbesondere in Form einer Schraubenfeder ausgebildeten Federelementes durch Veränderung der freien Länge des Bolzens, auf welchem das Federelement sitzt, einstellen zu können.

Um für einen einwandfreien, gasdichten Sitz der Filtertaschen zwischen dem Klemmflansch des Klemmrahmens und der Trennwand zu sorgen, ist die Mündung der Filtertaschen vorzugsweise mit einem zwischen dem Klemmflansch des Klemmrahmens und der Trennwand angeordneten Dichtring, insbesondere mit einem im wesentlichen rechteckförmigen Querschnitt, ausgestattet. Indes kann die Filtertasche selbstverständlich auch mit einer Rundschnurdichtung oder mit einem beliebigen andersartig ausgebildeten Dichtungsrand ausgestattet sein.

In Weiterbildung ist vorgesehen, daß der Klemmrahmen eine in die Öffnung der Trennwand hineinragende Manschette aufweist, um den Abstandhalter gegen die Filtertasche zu verspannen. Auf diese Weise wird der von dem Filtermaterial der Filtertasche umhüllte Abstandhalter bei der Montage des Klemmrahmens gegen die Filtertasche verspannt und ist letztere im montierten Zustand gestrafft gehalten.

In vorteilhafter Ausgestaltung kann in diesem Fall vorgesehen sein, daß die Manschette mit einer Zentrierung ausgestattet ist, welche mit dem Abstandhalter des Klemmrahmens zusammenwirkt, so daß der Abstandhalter und somit die Filtertasche exakt in der vorgesehene Position gehalten ist.

Wie bereits angedeutet, weisen die Abstandhalter der Filtertaschen in an sich bekannter Weise einen im wesentlichen flachen Querschnitt auf und sind die Öffnungen in der Trennwand im wesentlichen schlitzförmig ausgebildet. Um die flachen Filtertaschen mit ihren Flachseiten dabei möglichst dicht an dicht anordnen zu können, weist der Querschnitt der Abstandhalter benachbarter Filtertaschen in seinem zentralen Bereich vorzugsweise eine gegenüber seinen endseitigen Bereichen geringere Breite auf. Auf diese Weise ist es möglich, jeweils eine bzw. mehrere übereinander angeordneten Filtertaschen durch Beaufschlagung mit einem Innendruck mittels der Gasdüse zu reinigen, ohne daß das Filtermaterial benachbarter Filtertaschen dabei mit dem Filtermaterial der gereinigten Filtertaschen, welches anläßlich der Reinigung von dem Abstandhalter weg nach außen aufgeblasen wird, in Kontakt treten. Der Querschnitt der Abstandhalter benachbarter Filtertaschen ist dabei an seinen einander zugekehrten Seiten mit Vorteil im wesentlichen konkav ausgebildet.

Gemäß einer bevorzugten Ausgestaltung der Abstandhalter kann in diesem Fall vorgesehen sein, daß diese von mehreren, fluchtend angeordneten, im wesentlichen O-förmigen und mittels hierzu im wesentlichen senkrecht angeordneter Längsstäbe miteinander verbundenen Tragringen gebildet sind, deren die einander zugekehrten Seitenflächen der Filtertaschen ausspannenden Schenkel in ihrem zentralen Bereich miteinander verbunden sind. Die im wesentlichen O-förmigen Tragringe solcher Abstandhalter können in ihrem zentralen Bereich unmittelbar oder unter Zwischenordnung wenigstens eines weiteren Längsstabes, welcher den Abstandhalter zusätzlich versteift, mittelbar miteinander verbunden sein. Zur unmittelbaren oder mittelbaren Verbindung der im wesentlichen O-förmigen Tragringe der Abstandhalter in ihrem zentralen Bereich kann hierbei vorzugsweise eine Schweiß- oder Lötverbindung, aber auch jede beliebige andere Verbindung, wie eine Kleb-, Klemmverbindung oder dergleichen, vorgesehen sein.

Nachstehend ist die Erfindung anhand einer bevorzugten Ausführungsform unter Bezugnahme auf die Zeichnungen näher erläutert. Dabei zeigen:
- Fig. 1: einen Längsschnitt durch eine Filtervorrichtung;
- Fig. 2: einen Detailschnitt durch die die Reingaskammer von der Abscheidekammer distanzierende Trennwand der Filtervorrichtung gemäß Fig. 1 im Bereich der Öffnungen entlang der Linie II-II gemäß Fig. 3;
- Fig. 3: eine Draufsicht auf die Trennwand der Filtervorrichtung gemäß Fig. 1 von außen in Richtung des Pfeils III gemäß Fig. 2;
- Fig. 4: einen der Fig. 2 entsprechenden, vergrößert dargestellten Detailschnitt eines zwischen zwei Klemmrahmen angeordneten Niederhalters;
- Fig. 5: einen der Fig. 2 entsprechenden, vergrößert dargestellten Detailschnitt eines randseitigen Niederhalters;
- Fig. 6: eine der Fig. 3 entsprechende, vergrößert dargestellte Draufsicht auf einen zwischen zwei Klemmrahmen angeordneten Niederhalter; und
- Fig. 7: eine der Fig. 3 entsprechende, vergrößert dargestellte Draufsicht auf einen randseitigen Niederhalter.

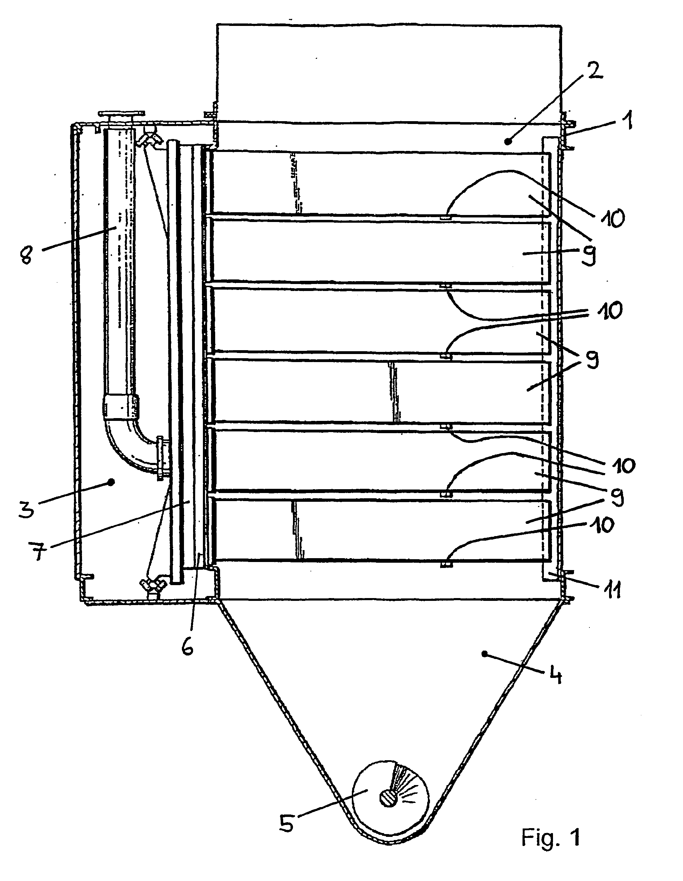

Die in Fig. 1 dargestellte Ausführungsform einer Filtervorrichtung in Form eines Taschenfilters zum Abscheiden von Partikeln, insbesondere Staub, aus Gasen umfaßt ein Filtergehäuse 1, welches eine Abscheidekammer 2, eine Reingaskammer 3 und eine die Abscheidekammer 2 nach unten erweiternde Sammelkammer 4 aufweist. Letztere ist im wesentlichen trichterförmig ausgebildet und an ihrer tiefsten Stelle mit einer Austragsschnecke 5 für den abgeschiedenen Staub ausgestattet. Die Abscheidekammer 2 ist über eine nicht dargestellte Leitung an den Rohgasstrom einer Staubgasquelle (ebenfalls nicht gezeigt) angeschlossen. Die Reingaskammer 3 steht während des Betriebs über eine gleichfalls nicht dargestellte Leitung mit einer Reingassenke (ebenfalls nicht gezeigt) in Verbindung. Eine Trennwand 6 teilt die Reingaskammer 3 von der Abscheidekammer 2 ab. In der Reingaskammer 3 befindet sich eine Spülluftdüse 7, welche mittels eines flexiblen Schlauches 8 und nicht dargestellter Leitungen an eine Druckluftquelle (ebenfalls nicht gezeigt) angeschlossen und in der Reingaskammer 3 parallel zur Erstreckungsrichtung der Trennwand 6 - beim vorliegenden Ausführungsbeispiel senkrecht zur Zeichnungsebene der Fig. 1 - taktweise verfahrbar ist. Die Spülluftdüse 7 überdeckt z.B. jeweils die Mündungen mehrerer, vorzugsweise sämtlicher, Filtertaschen 9 einer Spalte, um diese durch Beaufschlagen mit einem Innendruck zugleich von außenseitig anhaftenden Staubpartikeln zu reinigen. Die Spülluftdüse 7 ist ferner in eine Ruhe- bzw. Parkstellung verfahrbar, in welcher sie keine Filtertasche 9 überdeckt und die Durchströmung der Filtertaschen 9 mit dem gereinigten Gas nicht verhindert. Die Verlagerung der Spülluftdüse 7 kann beispielsweise mittels eines Seilzugs, mittels einer zu einer Führung der Spülluftdüse 7 komplementären Führungsschiene oder auf beliebige andere Weise geschehen.

In der Abscheidekammer 2 des Filtergehäuses 1 sind Filtertaschen 9 matrixartig jeweils in etwa horizontal ausgerichteten Reihen und vertikal ausgerichteten Spalten nebeneinander und übereinander angeordnet, wobei beim vorliegenden Ausführungsbeispiel insgesamt sechs solcher Reihen übereinander angeordnet sind. Für die Filtertaschen 9 einer jeder Reihe ist jeweils eine gemeinsame Auflagebank 10 vorgesehen, welche in Form einer Schiene quer zu den Filtertaschen 9 verläuft und am Filtergehäuse 1 befestigt ist. Die Filtertaschen 9 sind einerseits an der Trennwand 6 befestigt und andererseits lose auf der ihrer Reihe zugeordneten Auflagebank 10 abgestützt. An der Rückwand des Filtergehäuses 1 angebrachte Fluchtleisten 11 sind dazu bestimmt, die freien Enden der Filtertaschen 9 benachbarter vertikaler Spalten zu distanzieren und Bewegungen im Staubgasstrom zu verhindern. Alternativ oder zusätzlich können an der Rückwand des Filtergehäuses 1 z.B. elastische Klammerelemente (nicht dargestellt) vorgesehen sein, welche zum lösbaren Festklemmen der Filtertaschen 9 im Montagezustand dienen.

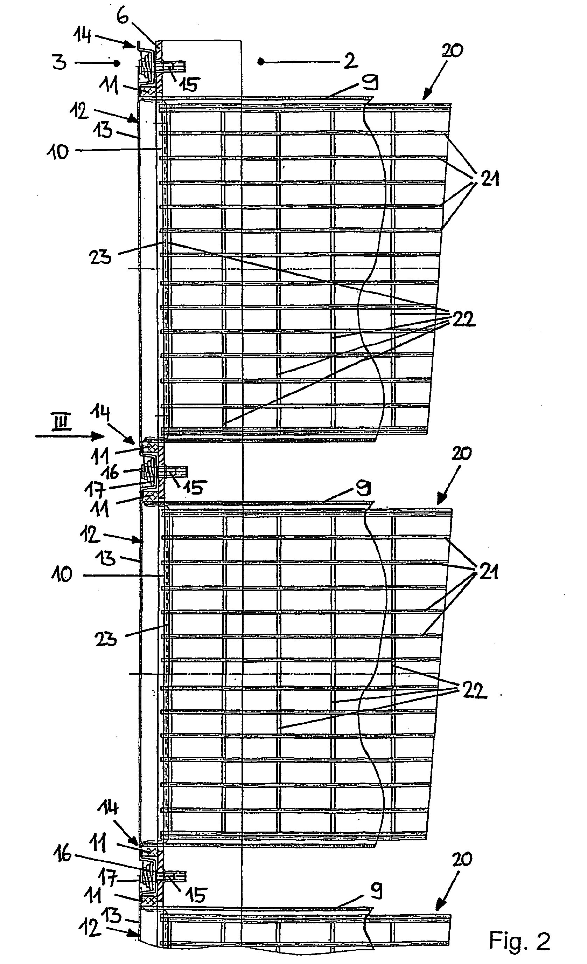

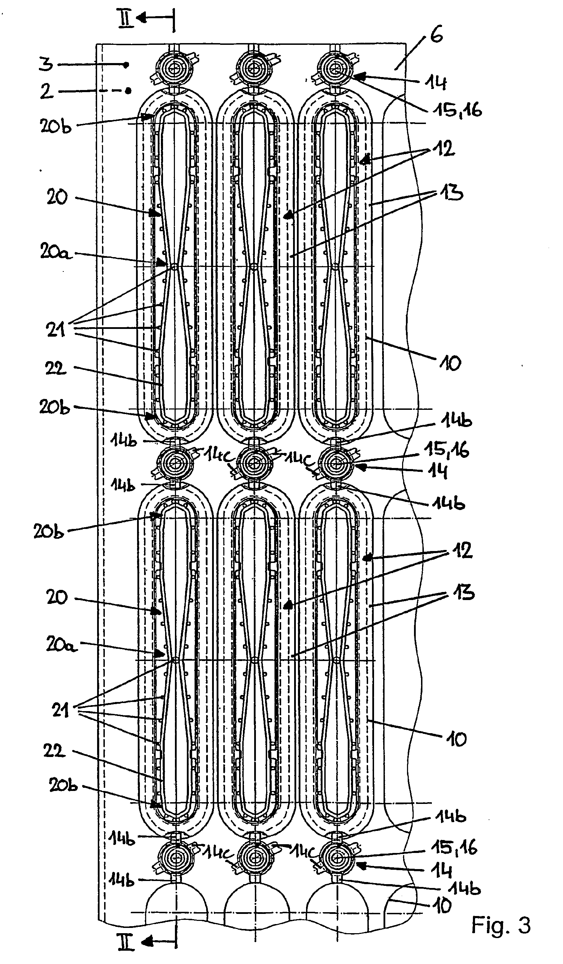

Wie insbesondere aus Fig. 2 und 3 ersichtlich, ist die die Abscheidekammer 2 von der Reinigungskammer 3 distanzierende Trennwand 6 im wesentlichen eben ausgebildet und mit matrixartig in Reihen und Spalten angeordneten, schlitzförmigen Öffnungen 10 ausgestattet, welche zur Aufnahme je einer Filtertasche 9 dienen. Die schlitzförmigen Öffnungen 10 weisen beim vorliegenden Ausführungsbeispiel eine vertikale Erstreckung auf, können indes selbstverständlich auch z.B. eine waagerechte oder beliebig andere Erstreckung aufweisen (nicht gezeigt). Die Spülluftdüse 7 (Fig. 1) ist derart bemessen, daß ihre Länge etwa der Länge einer senkrechten Spalte von Öffnungsschlitzen 10 entspricht, wobei sie vorzugsweise zumindest drei nebeneinander angeordnete Öffnungsschlitze 10 - also drei nebeneinander angeordnete, senkrechte Spalten von Öffnungsschlitzen 10 - überdeckt, von welchen die mittlere Spalte von Öffnungsschlitzen 10 mit Spülgas beaufschlagbar sind, während zumindest die beiden an diese Spalte angrenzenden Spalten von Öffnungsschlitzen 10 von der Spülluftdüse 7 abgedeckt sind. Folglich wird beim taktweisen Verfahren der Spülluftdüse 7 senkrecht zur Erstreckungsrichtung der Öffnungsschlitze 10 jeweils eine Spalte von Öffnungsschlitzen 10 abgereinigt, während die Öffnungsschlitze 10 der beiden hieran angrenzenden Spalten außer Betrieb gesetzt werden, um zu verhindern, daß sich der von den gereinigten Filtertaschen 9 abgelöste Staub wieder unmittelbar an die benachbarten Filtertaschen 9 anlagert.

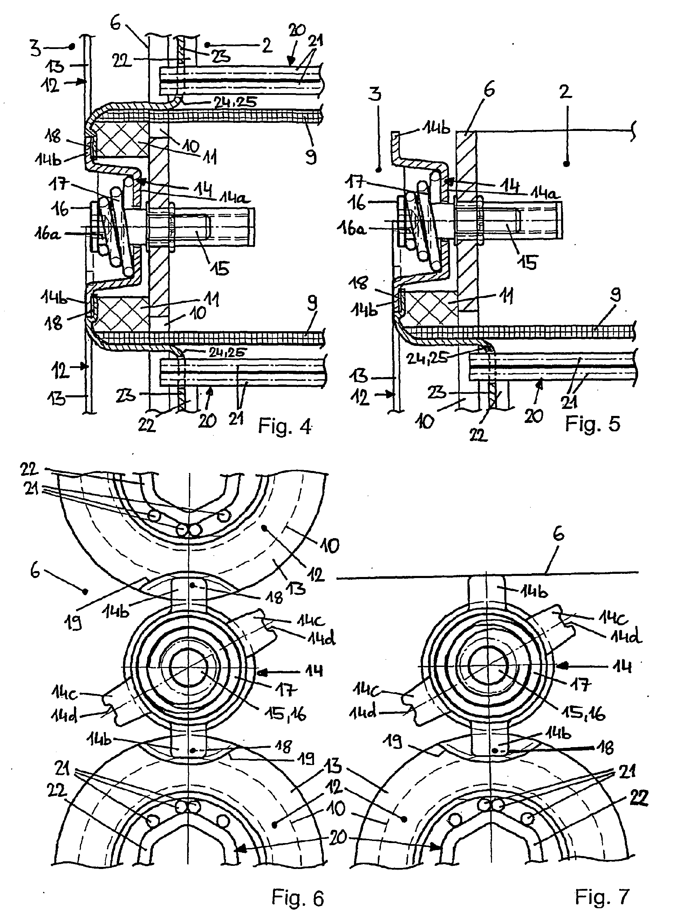

Wie Fig. 2 und 3 sowie insbesondere den detaillierten Darstellungen gemäß Fig. 4 bis 7 zu entnehmen ist, ist an jedem Öffnungsschlitz 10 der ebenen Trennwand 6 die Mündung einer (in Fig. 2 abgebrochenen dargestellten) Filtertasche 9 festgelegt. Dabei erstreckt sich jede an ihrem mündungsseitigen Außenrand mit einem Dichtring 11 mit etwa rechtekkigem Querschnitt versehene Filtertasche 9 von der Abscheidekammer 2 durch je einem Öffnungsschlitz 10 in der Trennwand 6 hindurch in die Reingaskammer 3 und ist der Dichtring 11 einer jeden Filtertasche 9, den zugehörigen Öffnungsschlitz 10 umgebend, zwischen der der Reingaskammer 3 zugewandten Seite der Trennwand 6 und einem Klemmrahmen 12 staubdicht festgelegt. Der Klemmrahmen 12 weist an seinem der Trennwand 6 abgewandten Ende einen Klemmflansch 13 auf, welcher den Dichtring 11 der Filtertasche 9 gasdicht gegen den Umfangsrand des Öffnungsschlitzes 10 andrückt.

Zur Befestigung der Klemmrahmen 12 an der Außenseite der Trennwand 6 sind Klemmelemente in Form von Niederhaltern 14 vorgesehen, welche mittels Bolzen 15 an der Trennwand 6 befestigt sind und einen elastischen Andruck der Klemmrahmen 12 in Richtung der Trennwand 6 bewirken, um dem Dichtring 11 der Filtertaschen 9 die geforderte Staubdichtigkeit zu verleihen. Dabei weisen die Niederhalter 14 beim vorliegenden Ausführungsbeispiel einen im wesentlichen runden Umfang und einen etwa U-förmigen Querschnitt auf, dessen zentraler Bodenabschnitt 14a zentrisch von dem Bolzen 15 durchsetzt und mittels einer auf dem Bolzen 15 sitzenden, zwischen dessen Kopf 16 und der der Trennwand 6 abgewandten Seite des Niederhalters 14 angeordneten Schraubenfeder 17 elastisch in Richtung der Trennwand 6 vorbelastet ist (vgl. insbesondere Fig. 4 und 5). An seinem Umfangsrand ist jeder Niederhalter 14 mit zwei entgegengesetzt angeordneten, radial nach außen vorstehenden Klemmvorsprüngen 14b ausgestattet, welche sich im wesentlichen parallel zum Bodenabschnitt 14a des Niederhalters 14 bzw. parallel zur Trennwand 6 und zur Erstreckungsebene des Klemmflansches 13 des Klemmrahmens 12 erstrecken und in dem in den Zeichnungen wiedergebenden Montagezustand die Klemmrahmen 12 jeweils benachbarte Öffnungsschlitze 10 einer Spalte an ihren entgegengesetzten Schmalseiten unter elastischem Andruck gegen die Trennwand 6 halten.

Auf diese Weise ergibt sich in Verbindung mit der Anordnung der Niederhalter 14 jeweils zwischen zwei Öffnungsschlitzen 10 einer Spalte derselben eine äußerst einfache und schnelle Montage bzw. Demontage der Klemmrahmen 12, indem die beiden Niederhalter 14 eines zu lösenden Klemmrahmens 12 aus ihrer in den Zeichnungen gezeigten Montageposition entgegen der durch die Schraubenfeder 17 bewirkten Vorspannung in Richtung des Kopfes 16 des Bolzens 15 von der Trennwand 6 weg bewegt und sodann um die Achse des Bolzens 15 gedreht werden, bis die Klemmvorsprünge 14b der Niederhalter 14 den Klemmrahmen 12 freigeben (nicht gezeigt). Während die Niederhalter 14 in dieser Position weiterhin mittels der Bolzen 15 an der Trennwand 6 gehalten sind, läßt sich sodann der jeweilige Klemmrahmen 12 abnehmen und die auszutauschende Filtertasche 9 durch den Öffnungsschlitz 10 aus der Abscheidekammer 2 herausziehen. Entsprechend einfach erfolgt die Montage einer neuen Filtertasche 9.

Ferner lassen sich die Filtertaschen 9 bzw. die in der Trennwand 6 vorgesehenen Öffnungsschlitze 10 insbesondere dicht an dicht anordnen und/oder verhältnismäßig breit ausbilden, um den in der Abscheidekammer 2 zur Verfügung stehenden Raum optimal ausnutzen zu können bzw. für einen möglichst großen Gesamtquerschnitt der Öffnungsschlitze 10 zu sorgen, welcher für den maximal möglichen Gasdurchsatz des Taschenfilters maßgeblich ist.

Um das Ergreifen des Niederhalters 14 anläßlich der Montage bzw. Demontage einer Filtertasche 9 zu erleichtern, ist dieser ferner mit zwei von seinem Umfangsrand radial nach außen vorstehenden, entgegengesetzt angeordneten Betätigungsvorsprüngen 14c ausgestattet (vergleiche insbesondere Fig. 4 und 7), welche zum Ergreifen des Niederhalters 14 mit einem Greifwerkzeug, z.B. einer Zange, dienen und zu diesem Zweck beispielsweise zusätzlich mit einer stirnseitigen Ausnehmung 14d ausgebildet sind, um ein Abrutschen des Greifwerkzeugs während des Drehens des Niederhalters 14 um die Achse des Bolzens 15 zu verhindern. Ferner sind die Bolzen 15 beim vorliegenden Ausführungsbeispiel in der Trennwand 6 verschraubt, so daß sich die durch die Schraubenfeder 17 bewirkte elastische Vorbelastung des Niederhalters 14 in gewissen Grenzen einstellen läßt. Die Bolzen 15 sind hierzu an ihrem kopfseitigen Ende z.B. mit einer Mehrkantöffnung 16a ausgestattet (vgl. Fig. 4 und 5).

Um für ein ungehindertes Verfahren der Spülgasdüse 7 (Fig. 1) entlang der Mündungen der Filtertaschen 9 zu sorgen, ist der von dem Niederhalter 14 übergriffene Abschnitt des Klemmflansches 13 des Klemmrahmens 12 zurückgenommen ausgebildet, so daß der Niederhalter 14 im wesentlichen auf dem Niveau des Klemmrahmens 12 angeordnet ist. Beim vorliegenden Ausführungsbeispiel weist der Klemmflansch 13 des Klemmrahmens 12 hierzu jeweils eine bezüglich dem Klemmvorsprung 14b des Niederhalters 14 etwa komplementäre Ausnehmung 18 auf, welche mit einer etwa kreisförmigen Anlaufschräge 19 in Richtung des Randes des Klemmflansches 13 versehen ist, um die Befestigung des Klemmrahmens 12, bei welcher der Niederhalter 14 um die Achse des Bolzens 15 gedreht und der Klemmvorsprung 14b des Niederhalters 14 dabei in die Ausnehmung 18 des Klemmflansches 13 eingebracht wird, zu erleichtern. Die Tiefe der Ausnehmung 18 ist dabei vorzugsweise so bemessen, daß der Klemmvorsprung 14b des Niederhalters 14 den Klemmflansch 13 des Klemmrahmens 12 im Montagezustand zumindest nicht übergreift und mit diesem z.B. im wesentlichen fluchtet. Ferner ist der Kopf 16 des den Niederhalter 14 an der Trennwand 6 haltenden Bolzens 15 mit einem Abstand von der Trennwand 6 angeordnet, welcher höchstens dem Abstand des Klemmflansches 13 des Klemmrahmens 12 von der Trennwand 6 entspricht (vgl. insbesondere Fig. 4 und 5). Auf diese Weise ist eine ungehinderte Bewegung der Spülgasdüse 7 (Fig. 1) in unmittelbarer Nähe der die Filtertaschen 9 klemmenden Klemmrahmen 12 möglich, wobei die Spülgasdüse 7 insbesondere auf den Klemmflanschen 13 der Klemmrahmen 12 gleitend verfahrbar sein kann.

Wie weiterhin aus Fig. 2 bis 7 ersichtlich, befindet sich in jeder Filtertasche 9 ein Abstandhalter 20, welcher den Innenraum der Filtertasche 9 freihält, während diese unter dem äußeren Druck des Staubgasstromes in der Abscheidekammer 2 steht. Die z.B. aus einem Textilmaterial gebildeten Filtertaschen 9 sind somit praktisch auf die Abstandhalter 20 aufgespannt. Jeder Abstandhalter 20 weist einen im wesentlichen flachen Querschnitt gemäß den zugeordneten Mündungsschlitzen 10 in der Trennwand 6 auf.

Wie insbesondere der Fig. 3 zu entnehmen ist, weist bei dem in den Zeichnungen wiedergegebenen Ausführungsbeispiel der Querschnitt der Abstandhalter 20 benachbarter Filtertaschen 9 in seinem zentralen Bereich 20a eine gegenüber seinen endseitigen Bereichen 20b geringere Breite auf, wobei die Abstandhalter 20 benachbarter Filtertaschen 9 an ihren einander zugekehrten Seiten etwa konkav ausgebildet sind. Auf diese Weise lassen sich die Spalten von Filtertaschen 9 unter einem sehr geringen seitlichen Abstand voneinander anordnen, da beim Spülen einer Spalte von Filtertaschen 9 mittels der Spülluftdüse 7 (Fig. 1) durch Beaufschlagen dieser Spalte von Filtertaschen 9 mit Innendruck, wobei das Filtermaterial dieser Filtertaschen 9 aufgeblasen wird, das Filtermaterial der gerade gereinigten Filtertaschen 9 nicht mit dem Filtermaterial der benachbarten Spalten von Filtertaschen 9 in Kontakt tritt, da sich dieses während des Betriebs in Folge des in der Abscheidekammer 2 herrschenden Überdrucks an die konkave Außenkontur der Abstandhalter 20 anschmiegt (nicht dargestellt). Die konkave Außenkontur der Filtertaschen 9 gemäß der Außenkontur der Abstandhalter 20 im Betriebszustand (nicht gezeigt) bietet somit den beim Aufblasen einer Spalte von Filtertaschen 9 anläßlich der Reinigung mit Spülgas erforderlichen Raum, um eine Anordnung der Filtertaschen 9 unter einem kleinstmöglichen seitlichen Abstand zu gewährleisten.

Beim vorliegenden Ausführungsbeispiel sind die Abstandhalter 20 von mehreren, fluchtend angeordneten, im wesentlichen O-förmigen und mittels hierzu im wesentlichen senkrecht angeordneter Längsstäbe 21 miteinander verbundenen Tragringen 22 gebildet, deren die einander zugekehrten Seitenflächen der Filtertaschen 9 aufspannenden Schenkel in ihren zentralen Bereich unter Zwischenanordnung eines weiteren, den Abstandhalter 20 zusätzlich versteifenden Längsstabes 21 (Fig. 3) miteinander verbunden sind. Die Längsstäbe 21 und Tragringe 22 der Abstandhalter 20 können beispielsweise aus rohr- oder stabförmigem Kunststoffmaterial oder Metall bestehen und vorzugsweise miteinander verschweißt, verlötet oder andersartig miteinander verbunden, z.B. verklebt, sein.

Um den Abstandhalter 20 in der Montageposition gegen die zugehörige Filtertasche 9 zu verspannen, weist jeder Klemmrahmen 12 eine in den Öffnungsschlitz 10 der Trennwand 6 hineinragende Manschette 23 auf, welche dem der Trennwand 6 zugewandten Ende des Abstandhalters 20 - beim vorliegenden Ausführungsbeispiel dem endseitigen Tragring 22 - als Widerlager dient (vergleiche insbesondere Fig. 4 und 5). Die Manschette 23 des Klemmrahmens 12 ist ferner mit einer Zentrierung 24 in Form von Durchbrüchen 25 ausgestattet, welche mit zumindest einigen Längsstäben 21 des Abstandhalters 10, welche über den der Trennwand 6 zugewandten, endseitigen Tragring 22 hinausragen, derart zusammenwirkt, daß die Längsstäbe 21 in die Durchbrüche 25 eingreifen und den Abstandhalter 20 somit in der gewünschten Montageposition bezüglich des Klemmrahmens 12 halten.

## Patentansprüche

1. Filtervorrichtung zum Abscheiden von Partikeln, insbesondere Staub, aus Gasen, mit einem Filtergehäuse (1) mit einer an einen Rohgasstrom anschließbaren Abscheidekammer (2) und einer von dieser durch wenigstens eine Trennwand (6) getrennten Reingaskammer (3), wobei die Abscheidekammer (2) mit mehreren in Reihen, Spalten und/oder matrixartig in Reihen und Spalten angeordneten Filterelementen aus einem auf einem Abstandhalter (20) angeordneten Filtertaschen (9) ausgestattet ist, deren Mündungen jeweils mittels eines durch Klemmelemente, welche an der der Abscheidekammer (2) abgewandten Seite der Trennwand (6) festlegbar sind, gehaltenen Klemmrahmens (12) derart an Öffnungen (10) in der Trennwand (6) festgelegt sind, daß der Mündungsabschnitt der Filtertasche (9) die Öffnung (10) in der Trennwand (6) in Richtung der Reingaskammer (3) durchsetzt und die Mündung der Filtertasche (9) im wesentlichen staubdicht zwischen der Trennwand (6) und einem Klemmflansch (13) des Klemmrahmens (12) geklemmt ist, wobei den Filterelementen wenigstens eine an eine Druckgasquelle anschließbare Gasdüse (7) zugeordnet ist, welche insbesondere taktweise über die Öffnungen (10) in der Trennwand (6) verfahrbar ist, um die Filtertaschen (9) mit einem Innendruck zu beaufschlagen, **dadurch gekennzeichnet, daß** die Klemmelemente von Niederhaltern (14) gebildet sind, welche an der der Abscheidekammer (2) abgewandten Seite der Trennwand (6) mittels Bolzen (15) befestigbar sind und die Klemmrahmen (12) an wenigstens zwei entgegengesetzten Seiten unter elastischem Andruck gegen die Trennwand (6) halten.

2. Filtervorrichtung nach Anspruch 1, **dadurch gekennzeichnet, daß** die Trennwand (6) im wesentlichen eben ausgebildet ist.

3. Filtervorrichtung nach Anspruch 1 oder 2, **dadurch gekennzeichnet, daß** die Niederhalter (14) mittels wenigstens eines zwischen dem Kopf (16) des Bolzens (15) und einem von dem Bolzen (15) durchsetzten Bodenabschnitt (14a) des Niederhalters (14) angeordneten Federelementes, insbesondere einer Schraubenfeder (17), elastisch in Richtung der Trennwand (6) vorbelastet sind.

4. Filtervorrichtung nach einem der Ansprüche 1 bis 3, **dadurch gekennzeichnet, daß** die Niederhalter (14) wenigstens einen, im wesentlichen radial nach außen vorstehenden Klemmvorsprung (14b) aufweisen, welcher durch Drehen des Niederhalters (14) um die Achse des Bolzens (15) in eine Position bringbar ist, in welcher er den Klemmflansch (13) des Klemmrahmen (12) unter Zwischenanordnung der Mündung der Filtertasche (9) gegen die Trennwand (6) andrückt.

5. Filtervorrichtung nach Anspruch 4, **dadurch gekennzeichnet, daß** zumindest einige Niederhalter (14) mit zwei, insbesondere entgegengesetzt angeordneten, Klemmvorsprüngen (14b) ausgestattet sind, welche durch Drehen des Niederhalters (14) um die Achse des Bolzens (15) in eine Position bringbar sind, in welcher sie die Klemmflansche (13) zweier benachbarter Klemmrahmen (12) unter Zwischenanordnung der Mündung der jeweils zugehörigen Filtertaschen (9) gegen die Trennwand (6) andrükken.

6. Filtervorrichtung nach Anspruch 4 oder 5, **dadurch gekennzeichnet, daß** der Klemmflansch (13) des Klemmrahmens (12) eine Anlaufschräge (19) für den Klemmvorsprung (14b) des Niederhalters (14) aufweist.

7. Filtervorrichtung nach einem der Ansprüche 1 bis 6, **dadurch gekennzeichnet, daß** der von dem Niederhalter (14) übergriffene Abschnitt (18) des Klemmflansches (13) des Klemmrahmens (12) zurückgenommen ausgebildet ist, so daß der Niederhalter (14) im wesentlichen auf dem Niveau des Klemmrahmens (12) angeordnet ist.

8. Filtervorrichtung nach einem der Ansprüche 1 bis 7, **dadurch gekennzeichnet, daß** der Kopf (16) des den Niederhalter (14) an der Trennwand (6) haltenden Bolzens (15) mit einem Abstand von der Trennwand (6) angeordnet ist, welcher höchstens dem Abstand des Klemmflansches (13) des Klemmrahmens (12) von der Trennwand (6) entspricht.

9. Filtervorrichtung nach einem der Ansprüche 4 bis 8, **dadurch gekennzeichnet, daß** die Niederhalter (14) zwei im wesentlichen radial nach außen vorstehende, entgegengesetzt angeordnete Betätigungsvorsprünge (14c) aufweisen, welche zum Ergreifen derselben, insbesondere mittels eines Werkzeugs, ausgebildet sind.

10. Filtervorrichtung nach einem der Ansprüche 1 bis 9, **dadurch gekennzeichnet, daß** die Bolzen (15) an der der Abscheidekammer (2) abgewandten Seite der Trennwand (6) verschraubbar sind.

11. Filtervorrichtung nach einem der Ansprüche 1 bis 10, **dadurch gekennzeichnet, daß** die Mündung der Filtertaschen (9) mit einem zwischen dem Klemmflansch (13) des Klemmrahmens (12) und der Trennwand (6) angeordneten Dichtring (11), insbesondere mit einem im wesentlichen rechteckförmigen Querschnitt, ausgestattet ist.

12. Filtervorrichtung nach einem der Ansprüche 1 bis 11, **dadurch gekennzeichnet, daß** der Klemmrahmen (12) eine in die Öffnung (10) in der Trennwand (6) hineinragende Manschette (23) aufweist, um den Abstandhalter (20) gegen die Filtertasche (9) zu verspannen.

13. Filtervorrichtung nach Anspruch 12, **dadurch gekennzeichnet, daß** die Manschette (23) mit einer Zentrierung (24) ausgestattet ist, welche mit dem Abstandhalter (20) der Filtertasche (9) zusammenwirkt.

14. Filtervorrichtung nach einem der Ansprüche 1 bis 13, **dadurch gekennzeichnet, daß** die Abstandhalter (20) der Filtertaschen (9) einen im wesentlichen flachen Querschnitt aufweisen und die Öffnungen (10) in der Trennwand (6) im wesentlichen schlitzförmig ausgebildet sind.

15. Filtervorrichtung nach Anspruch 14, **dadurch gekennzeichnet, daß** der Querschnitt der Abstandhalter (20) benachbarter Filtertaschen (9) in seinem zentralen Bereich (20a) eine gegenüber seinen endseitigen Bereichen (20b) geringere Breite aufweist.

16. Filtervorrichtung nach Anspruch 15, **dadurch gekennzeichnet, daß** der Querschnitt der Abstandhalter (20) benachbarter Filtertaschen (9) an seinen einander zugekehrten Seiten im wesentlichen konkav ausgebildet ist.

17. Filtervorrichtung nach Anspruch 15 oder 16, **dadurch gekennzeichnet, daß** die Abstandhalter (20) von mehreren, fluchtend angeordneten, im wesentlichen O-förmigen und mittels hierzu im wesentlichen senkrecht angeordneter Längsstäbe (21) miteinander verbundenen Tragringen (22) gebildet sind, deren die einander zugekehrten Seitenflächen der Filtertaschen aufspannenden Schenkel in ihrem zentralen Bereich (20a) miteinander verbunden sind.

18. Filtervorrichtung nach Anspruch 17, **dadurch gekennzeichnet, daß** die im wesentlichen O-förmigen Tragringe (22) der Abstandhalter (20) in ihrem zentralen Bereich (20a) unmittelbar oder unter Zwischenanordnung wenigstens eines weiteren Längsstabes (21) mittelbar miteinander verbunden sind.

19. Filtervorrichtung nach Anspruch 18, **dadurch gekennzeichnet, daß** die im wesentlichen O-förmigen Tragringe (22) der Abstandhalter (20) in ihrem zentralen Bereich (20a) unmittelbar oder mittelbar miteinander verschweißt oder verlötet sind.

## Claims

1. A filter device for separating particles, in particular dust, from gases, having a filter housing (1) with a separating chamber (2) connectable to an untreated gas stream and a clean gas chamber (3) separated from the separating chamber by at least one partition wall (6), the separating chamber (2) being provided with a plurality of filter elements arranged in rows, columns and/or in the manner of a matrix in rows and columns, said filter elements comprising filter pockets (9) arranged on a spacer (20), the orifices of which filter pockets are in each case fixed by means of a clamping frame (12) held in place by clamping elements, which may be fixed on the side of the partition wall (6) remote from the separating chamber (2), to openings (10) in the partition wall (6) in such a way that the orifice portion of the filter pocket (9) passes through the opening (10) in the partition wall (6) in the direction of the clean gas chamber (3) and the orifice of the filter pocket (9) is clamped in substantially dusttight manner between the partition wall (6) and a clamping flange (13) of the clamping frame (12), at least one gas nozzle (7) connectable to a compressed gas source being assigned to the filter elements, which gas nozzle (7) may be displaced in particular in cycles over the openings (10) in the partition wall (6), in order to expose the filter pockets (9) to an internal pressure, **characterised in that** the clamping elements are formed of pressure pads (14) which may be fastened to the side of the partition wall (6) remote from the separating chamber (2) by means of bolts (15) and hold the clamping frames (12) under resilient pressure against the partition wall (6) on at least two opposite sides.

2. A filter device according to claim 1, **characterised in that** the partition wall (6) is of substantially flat construction.

3. A filter device according to claim 1 or claim 2, **characterised in that** the pressure pads (14) are resiliently preloaded in the direction of the partition wall (6) by means of at least one spring element, in particular a helical spring, arranged between the head (16) of the bolt (15) and a base portion (14a) of the pressure pad (14) through which the bolt (15) passes.

4. A filter device according to any one of claims 1 to 3, **characterised in that** the pressure pads (14) comprise at least one substantially radially outwardly protruding clamping projection (14b), which may be brought by turning the pressure pad (14) about the axis of the bolt (15) into a position in which it presses the clamping flange (13) of the clamping frame (12) against the partition wall (6) with interposition of the orifice of the filter pocket (9).

5. A filter device according to claim 4, **characterised in that** at least some pressure pads (14) are provided with two, in particular opposingly arranged, clamping projections (14b), which may be brought by rotation of the pressure pad (14) about the axis of the bolt (15) into a position in which they press the clamping flanges (13) of two adjoining clamping frames (12) against the partition wall (6) with interposition of the orifice of the in each case associated filter pockets (9).

6. A filter device according to claim 4 or claim 5, **characterised in that** the clamping flange (13) of the clamping frame (12) comprises a stop bevel (19) for the clamping projection (14b) of the pressure pad (14).

7. A filter device according to any one of claims 1 to 6, **characterised in that** the portion (18) of the clamping flange (13) of the clamping frame (12) overlapped by the pressure pad (14) is of recessed construction, such that the pressure pad (14) is arranged substantially on a level with the clamping frame (12).

8. A filter device according to any one of claims 1 to 7, **characterised in that** the head (16) of the bolt (15) holding the pressure pad (14) on the partition wall (6) is arranged at a distance from the partition wall (6) which corresponds at most to the distance between the clamping flange (13) of the clamping frame (12) and the partition wall (6).

9. A filter device according to any one of claims 4 to 8, **characterised in that** the pressure pads (14) comprise two substantially radially outwardly protruding, opposingly arranged actuating projections (14c), which are provided for gripping thereof, in particular by means of a tool.

10. A filter device according to any one of claims 1 to 9, **characterised in that** the bolts (15) may be screwed to the side of the partition wall (6) remote from the separating chamber (2).

11. A filter device according to any one of claims 1 to 10, **characterised in that** the orifice of the filter pockets (9) is provided with a sealing ring (11), in particular with a substantially rectangular cross-section, arranged between the clamping flange (13) of the clamping frame (12) and the partition wall (6).

12. A filter device according to any one of claims 1 to 11, **characterised in that** the clamping frame (12) comprises a collar (23) projecting into the opening (10) in the partition wall (6), in order to brace the spacer (20) against the filter pocket (9).

13. A filter device according to claim 12, **characterised in that** the collar (23) is provided with a centring means (24), which cooperates with the spacer (20) of the filter pocket (9).

14. A filter device according to any one of claims 1 to 13, **characterised in that** the spacers (20) of the filter pockets (9) have a substantially flat cross section and the openings (10) in the partition wall (6) are of substantially slot-shaped construction.

15. A filter device according to claim 14, **characterised in that** the cross-section of the spacers (20) of neighbouring filter pockets (9) has a smaller width in its central region (20a) than in its end regions (20b).

16. A filter device according to claim 15, **characterised in that** the cross-section of the spacers (20) of neighbouring filter pockets (9) is of substantially concave construction at its mutually facing sides.

17. A filter device according to claim 15 or claim 16, **characterised in that** the spacers (20) are formed of a plurality of in-line, substantially O-shaped supporting rings (22) connected together by means of longitudinal rods (21) arranged substantially perpendicularly thereto, the branches of these supporting rings mounting the mutually facing side faces of the filter pockets being connected together in their central region (20a).

18. A filter device according to claim 17, **characterised in that** the substantially O-shaped supporting rings (22) of the spacers (20) are connected directly together in their central region (20a) or indirectly with interposition of at least one further longitudinal rod (21).

19. A filter device according to claim 18, **characterised in that** the substantially O-shaped supporting rings (22) of the spacers (20) are welded or soldered together directly or indirectly in their central region (20a) .

## Revendications

1. Dispositif de filtration pour séparer des particules, et singulièrement de la poussière, contenues dans des gaz, avec un carter de filtre (1) avec une chambre de séparation (2) raccordable au flux de gaz brut et une chambre de gaz purifié (3) séparée de ladite chambre de séparation par au moins une cloison (6), la chambre de séparation (2) étant équipée de plusieurs éléments filtrants disposés en rangées, colonnes et/ou en grille de rangées et colonnes, lesdits éléments étant constitués par une poche filtrante (9) disposée sur un écarteur (20), la bouche de ladite poche étant fixée contre des ouvertures (10) dans la cloison (6) au moyen d'un châssis (12) maintenu par des éléments de calage pouvant être eux-mêmes fixés sur la face de la cloison (6) opposée à la chambre de séparation (2), de telle manière que la section d'ouverture de la poche filtrante (9) traverse l'ouverture (10) dans la cloison (6) en direction de la chambre de gaz purifié (3), l'ouverture de la poche filtrante (9) étant essentiellement hermétique à la poussière entre la cloison (6) et une bride (13) du châssis (12), une tuyère à gaz (7) au moins, raccordable à une source de gaz comprimé, étant affectée auxdits éléments filtrants, ladite tuyère se déplaçant cycliquement d'une ouverture (10) à l'autre dans la cloison (6) pour soumettre les poches filtrantes (9) à une pression intérieure, **caractérisé en ce que** les éléments de calage sont formés par des serre-flans (14), lesdits serre-flans pouvant être raccrochés sur la face de la cloison (6) opposée à la chambre de séparation (2) au moyen de chevilles métalliques (15) et retenant les châssis (12) par pression élastique contre la cloison (6) sur au moins deux côtés opposés.

2. Dispositif de filtration selon la revendication 1, **caractérisé en ce que** la surface de la cloison (6) est essentiellement plane.

3. Dispositif de filtration selon l'une des revendications 1 ou 2, **caractérisé en ce que** les serre-flans (14) sont précontraints de manière élastique en direction de la cloison (6) par au moins un ressort, singulièrement un ressort cylindrique (17) placé entre la tête (16) de la cheville métallique (15) et une section (14a) du serre-flan (14) traversée par la cheville métallique (15).

4. Dispositif de filtration selon une des revendications 1 à 3, **caractérisé en ce que** les serre-flans (14) possèdent au moins un porte-à-faux (14b) radial vers l'extérieur pouvant être amené, en faisant tourner le serre-flan (14) autour de l'axe de la cheville métallique (15), dans une position dans laquelle ledit porte-à-faux pousse contre la cloison (6) la bride (13) du châssis (12) et la bouche de la poche filtrante (9) intercalée.

5. Dispositif de filtration selon la revendication 4, **caractérisé en ce qu'**au moins quelques serre-flans (14) possèdent deux porte-à-faux (14b) opposés, lesdits porte-à-faux pouvant être amenés en faisant tourner le serre-flan (14) autour de l'axe de la cheville métallique (15) dans une position dans laquelle ils poussent contre la paroi (6) les brides de serrage (13) de deux châssis voisins (12), la bouche des poches filtrantes (9) correspondantes étant intercalée.

6. Dispositif de filtration selon l'une des revendications 4 ou 5, **caractérisé en ce que** la bride (13) du châssis (12) possède un chanfrein d'attaque (19) pour le porte-à-faux (14b) du serre-flan (14).

7. Dispositif de filtration selon une des revendications 1 à 6, **caractérisé en ce que** la section (18) de la bride (13) du châssis (12) chevauchée par le serre-flan (14) forme un retrait de sorte que le serre-flan (14) se trouve principalement au niveau du châssis (12).

8. Dispositif de filtration selon une des revendications 1 à 7, **caractérisé en ce que** la tête (16) de la cheville métallique (15) retenant le serre-flan (14) contre la cloison (6) est placé à une distance de la cloison (6) égale au maximum à la distance entre la bride (13) du châssis (12) et la cloison (6).

9. Dispositif de filtration selon une revendications 4 à 8, **caractérisé en ce que** les serre-flans (14) possèdent deux porte-à-faux (14c) d'actionnement opposés, disposés radialement vers l'extérieur et formés pour être saisis notamment au moyen d'un outil.

10. Dispositif de filtration selon une des revendications 1 à 9, **caractérisé en ce que** les chevilles métalliques (15) peuvent être vissées sur la face de la cloison (6) opposée à la chambre de séparation (2).

11. Dispositif de filtration selon une des revendications 1 à 10, **caractérisé en ce que** la bouche des poches filtrantes (9) est dotée d'une bague d'étanchéité (11) placée entre la bride (13) du châssis (12) et la cloison (6) et présentant une section principalement rectangulaire.

12. Dispositif de filtration selon une des revendications 1 à 11, **caractérisé en ce que** le châssis (12) présente une manchette (23) s'insérant dans l'ouverture (10) de la cloison (6) afin de forcer l'écarteur (20) contre la poche filtrante (9).

13. Dispositif de filtration selon la revendication 12, **caractérisé en ce que** la manchette (23) est dotée d'un centrage (24) lequel s'exerce en commun avec l'écarteur (20) de la poche filtrante (9).

14. Dispositif de filtration selon une des revendications 1 à 13, **caractérisé en ce que** les écarteurs (20) des poches filtrantes (9) présentent une section principalement plane tandis que les ouvertures (10) dans la cloison (6) sont principalement en forme de fente.

15. Dispositif de filtration selon la revendication 14, **caractérisé en ce que** la section des écarteurs (20) de poches filtrantes (9) voisines présente dans sa partie centrale (20a) une largeur inférieure à celle de ses extrémités (20b).

16. Dispositif de filtration selon la revendication 15, **caractérisé en ce que** la section des écarteurs (20) des poches filtrantes voisine (9) est de forme essentiellement concave sur les côtés adjacents.

17. Dispositif de filtration selon une des revendications 15 ou 16, **caractérisé en ce que** les écarteurs (20) sont constitués par plusieurs anneaux porteurs (22) disposés en alignement, principalement en forme d'O et reliés entre eux au moyen de barreaux longitudinaux (21) disposés à cet effet de façon principalement verticale, les branches desdits anneaux porteurs serrant les faces latérales adjacentes des poches filtrantes étant reliées entre elles dans leur partie centrale (20a).

18. Dispositif de filtration selon la revendication 17, **caractérisé en ce que** les anneaux porteurs (22) des écarteurs (20) formant principalement un O sont reliés entre eux dans leur partie centrale (20a) soit directement soit indirectement en intercalant au moins un autre barreau longitudinal (21).

19. Dispositif de filtration selon la revendication 18, **caractérisé en ce que** les anneaux porteurs (22) des écarteurs (20) formant principalement un O sont soudés ou brasés entre eux dans leur partie centrale (20a) soit directement soit indirectement.
